# EUROPÄISCHE PATENTSCHRIFT

(11) **EP 2 675 866 B1**
(45) Veröffentlichungstag und Bekanntmachung des Hinweises auf die Patenterteilung: **14.01.2015**
(21) Anmeldenummer: 12704272.9
(22) Anmeldetag: 15.02.2012
(51) Int. Cl.: C09K 8/588

(54) **VERFAHREN ZUR ERDÖLFÖRDERUNG AUS ERDÖLLAGERSTÄTTEN MIT HOHER LAGERSTÄTTENTEMPERATUR**
METHOD FOR EXTRACTING CRUDE OIL FROM CRUDE OIL RESERVOIRS WITH A HIGH RESERVOIR TEMPERATURE
PROCÉDÉ POUR L'EXTRACTION DE PÉTROLE DE GISEMENTS DE PÉTROLE PRÉSENTANT UNE TEMPÉRATURE DE GISEMENT ÉLEVÉE

(30) Priorität: 16.02.2011 EP 11154670
(43) Veröffentlichungstag der Anmeldung: 25.12.2013
(73) Patentinhaber: Wintershall Holding GmbH, 34119 Kassel (DE)
(72) Erfinder: BRIECHLE, Sebastian, 67227 Frankenthal (DE); FAUST, Tillmann, 67256 Weisenheim am Sand (DE); FREYER, Stephan, 67434 Neustadt (DE); HOLLMANN, Rajan, 49152 Bad Essen (DE); KÄPPLER, Tobias, 67133 Maxdorf (DE); LEONHARDT, Bernd, 34128 Kassel (DE); SCHMIDT, Julia Kristiane, 69115 Heidelberg (DE); WENZKE, Benjamin, 20251 Hamburg (DE); VISSER, Foppe, 34225 Baunatal-Großenritte (DE)
(74) Vertreter: Dierkes, Thorsten
(86) Internationale Anmeldenummer: PCT/EP2012/052557
(87) Internationale Veröffentlichungsnummer: WO 2012/110539

(56) Entgegenhaltungen:
- DE-A1- 3 838 352
- US-A- 3 372 749
- US-A- 4 347 146
- US-A- 4 457 372

## Beschreibung

Die vorliegende Erfindung betrifft ein zweistufiges Verfahren zur Erdölförderung aus Erdöllagerstätten mit einer Lagerstättentemperatur von mehr als 70°C und einer Salinität von 20000 ppm bis 350000 ppm, bei dem man wässrige Formulierung umfassend mindestens ein Glucan mit einer β-1,3-glykosidisch verknüpften Hauptkette sowie β-1,6-glykosidisch daran gebundenen Seitengruppen mit einem gewichtsmittleren Molekulargewicht M_{w} von 1,5*10⁶ bis 25*10⁶ g/mol durch mindestens eine Injektionsbohrung in eine Erdöllagerstätte einpresst und der Lagerstätte durch mindestens eine Produktionsbohrung Rohöl entnimmt. Die Herstellung der wässrigen Formulierung erfolgt zweistufig, indem man zunächst ein wässriges Konzentrat des Glucans herstellt und das Konzentrat vor Ort mit Wasser auf die Einsatzkonzentration verdünnt.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Neben Erdöl, inklusive Anteilen von Erdgas enthält eine Lagerstätte mehr oder weniger stark salzhaltiges Wasser.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Mittels der primären Förderung lassen sich je nach Lagerstättentyp aber meist nur ca. 5 bis 10% der in der Lagerstätte vorhandenen Erdölmenge fördern, danach reicht der Eigendruck nicht mehr zur Förderung.

Nach der primären Förderung kommt daher die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser und/oder Dampf in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstandes, also durch den gebildeten Kanal zwischen den Injektions- und den Produktionsbohrungen und schiebt nicht mehr das Öl vor sich her. Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Zur tertiären Erdölförderung gehören Verfahren, bei denen man geeignete Chemikalien als Hilfsmittel zur Ölförderung einsetzt. Hierzu gehört das so genannte "Polymerfluten". Beim Polymerfluten presst man durch die Injektionsbohrungen anstelle von Wasser eine wässrige Lösung eines verdickend wirkenden Polymers in die Erdöllagerstätte ein. Durch das Einpressen der Polymerlösung wird das Erdöl durch die besagten Hohlräume in der Formation von der Injektionsbohrung ausgehend in Richtung der Produktionsbohrung gedrückt, und das Erdöl wird schließlich über die Produktionsbohrung gefördert. Aufgrund der erhöhten Viskosität der Polymerlösung, welche an die Viskosität des Erdöls angepasst wird, kann die Polymerlösung nicht mehr oder zumindest nicht so leicht durch Hohlräume durchbrechen wie dies bei reinem Wasser der Fall ist. Dem Wasser nicht zugängliche Teile der Lagerstätte werden durch die Polymerlösung erreicht.

Zum Polymerfluten sind eine Vielzahl verschiedener, verdickend wirkender wasserlöslicher Polymere vorgeschlagen worden, und zwar sowohl synthetische Polymere, wie beispielsweise Polyacrylamid oder Copolymere aus Acrylamid und anderen Monomeren, insbesondere Sulfonsäuregruppen aufweisende Monomere sowie Polymere natürlichen Ursprungs wie beispielsweise Glucosylglucane, Xanthane oder Diutane.

Bei Glucosylglucanen handelt es sich um verzweigte Homopolysaccharide aus Glucoseeinheiten. Homopolysaccharide aus Glucoseeinheiten werden Glucane genannt. Die genannten verzweigten Homopolysaccharide weisen eine Hauptkette aus β-1,3-verknüpften Glucoseeinheiten auf, von denen -statistisch gesehen- etwa jede dritte Einheit mit einer weiteren Glucoseeinheit β-1,6-glykosidisch verknüpft ist. Glucosylglucane werden von verschiedenen Pilzstämmen sekretiert, beispielsweise von dem filamantös wachsenden Basidiomycet *Schizophyllum commune,* der während des Wachstums ein Homopolysaccharid der genannten Struktur mit einem typischen Molekulargewicht M_{w} von ca. 5 bis ca. 25*10⁶ g/mol ausscheidet (Trivialname Schizophyllan). Weiterhin zu nennen sind von *Sclerotium rolfsii* sekretierte Homopolysaccharide der genannten Struktur (Trivialname: Scleroglucane).

Die Herstellung der derartiger Glucosylglucane ist beispielsweise in EP 271 907 A2, EP 504 673 A1, DE 40 12 238 A1 sowie WO 03/016545 offenbart, und zwar erfolgt die Herstellung durch Fermentation geeigneter Pilzstämme unter Rühren und Belüftung sowie Abtrennen des gebildeten Polysaccharids.

CA 832 277 A offenbart die Verwendung von wässrigen Lösungen von Glucosylglucanen zum Polymerfluten. Die eingesetzten wässrigen Lösungen weisen bei einer Konzentration von 1 Gew. % bei 24°C eine Viskosität von mindestens 500 mPa*s auf und die Konzentration der Glucosylglucane beträgt 0,005 bis 1 Gew. %, bevorzugt 0,01 bis 0,3 Gew. %. Die eingesetzten Lösungen können darüber hinaus weitere Komponenten wie beispielsweise Tenside, Biozide oder Basen, wie beispielsweise Alkylimetallhydroxide umfassen.

EP 271 907 A1 offenbart ein Verfahren zur Herstellung von Glucosylglucanen, hierzu besonders geeignete Pilzstämme sowie die Verwendung derartiger Glucosylglucane zur tertiären Erdölförderung. Die Schrift offenbart weiterhin Messungen der Viskosität wässriger Lösungen in salinarem Wasser bei Temperaturen von 25°C bis 60°C.

Udo Rau, Andreas Haarstrick und Fritz Wagner, Chem. Ing. Tech. 64(6) (1992), Seite 576/577 schlagen die Verwendung von Schizophyllan-Lösungen zum Polymerfluten von ErdölLagerstätten mit hoher Temperatur und Salinität vor, ohne dass Einzelheiten eines Verfahrens beschrieben sind.

Udo Rau, "Biosynthese, Produktion und Eigenschaften von extrazellulären Pilz-Glucanen" in Berichte aus der Biotechnologie, Shaker Verlag, Aachen, 1997, Seiten 106 ff. erwähnt, dass Schizophyllan-Lösungen eine Temperaturstabilität bis 135°C aufweisen und daher für die tertiäre Erdölförderung in tiefen Lagerstätten, z.B. in der Nordsee, geeignet sein sollten. Erwähnt wird weiterhin, dass Schizophyllan eine reversible Viskositätserniedrigung bis zu einer Scherrate von 40000 s⁻¹ aufweist. Weiterhin wird darauf hingewiesen, dass die Viskosität von Schizophyllan-Lösungen durch die Anwesenheit von Alkali- und Erdalkalimetallionen kaum beeinflusst wird.

Aufgabe der Erfindung war es, ein verbessertes Verfahren zum Polymerfluten für Lagerstätten mit Lagerstättentemperaturen von mindestens 70°C unter Verwendung von Glucosylglucanen bereit zu stellen.

Dementsprechend wurde ein Verfahren zur Erdölförderung aus Lagerstätten mit einer Lagerstättentemperatur T_{L} von mindestens 70°C gefunden, wobei die Lagerstätte neben Öl Lagerstättenwasser mit einer Salinität von 20 000 ppm bis 350 000 ppm umfasst, und das Öl eine Viskosität η_{O} (gemessen T_{L}) von mindestens 3 mPa*s aufweist, indem man eine wässrige Formulierung (F) umfassend mindestens ein Glucan mit einer β-1,3-glykosidisch verknüpften Hauptkette sowie β-1,6-glykosidisch daran gebundenen Seitengruppen mit einem gewichtsmittleren Molekulargewicht M_{w} von 1,5*10⁶ bis 25*10⁶ g/mol durch mindestens eine Injektionsbohrung in eine Erdöllagerstätte einpresst und der Lagerstätte durch mindestens eine Produktionsbohrung Rohöl entnimmt, und wobei das Verfahren mindestens die folgenden Verfahrensschritte umfasst:
(1) Bereitstellen eines Konzentrats (K) des Glucans in Wasser mit einer Konzentration von mehr als 3 g/l bis 30 g/l,
(2) Herstellen der wässrigen Formulierung (F) durch Verdünnen des gemäß Schritt (1) bereitgestellten Konzentrats (K) vor Ort mit Wasser auf eine Glucankonzentration von 0,05 g/l bis 3 g/l, mit der Maßgabe, dass man die Konzentration so wählt, dass die Viskosität η_{F} (gemessen bei 7 s⁻¹ und T_{L}) der wässrigen Formulierung (F) mindestens 3 mPa*s beträgt, wobei die Viskosität η_{F} im Vergleich zu der Viskosität η_{Öl} (gemessen bei T_{L}) so gewählt wird, dass η_{F} ≤ η_{Öl} ist, sowie
(3) Injizieren derwässrigen Formulierung (F) in die Erdölformation und Entnahme von Rohöl durch mindestens eine Produktionsbohrung.

Zu der Erfindung ist im Einzelnen das Folgende auszuführen:

Zur Ausführung des erfindungsgemäßen Verfahrens werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Zur Ausführung des erfindungsgemäßen Verfahrens zur Erdölförderung wird eine wässrige Formulierung (F), mindestens umfassend ein Glucan mit einer β-1,3-glykosidisch verknüpften Hauptkette sowie β-1,6-glykosidisch daran gebundenen Seitengruppen eingesetzt und durch mindestens eine Injektionsbohrung in eine Erdöllagerstätte injiziert.

Mit dem Begriff "Erdöl" ist in diesem Zusammenhang selbstverständlich nicht nur phasenreines Öl gemeint, sondern der Begriff umfasst auch die üblichen Rohöl-Lagerstättenwasser-Emulsionen. Durch den durch die eingepresste Formulierung, die sogenannte "Polymerflut" erzeugten Druck, fließt das Erdöl in Richtung der Produktionsbohrung und wird über die Produktionsbohrung gefördert.

Die Lagerstättentemperatur der Erdöllagerstätte, auf die das erfindungsgemäße Verfahren angewandt wird, beträgt erfindungsgemäß mindestens 70°C, insbesondere 70°C bis 150°C, bevorzugt 80°C bis 145°C, besonders bevorzugt 90°C bis 140°C, ganz besonders bevorzugt 100 bis 135°C und beispielsweise 105°C bis 130°C.

Derartige, vergleichsweise hohe Lagerstättentemperaturen finden sich vor allem bei vergleichsweise tief gelegenen Erdöllagerstätten.

Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions- und Produktionsbohrungen, der vom Polymerfluten erfasst wird. Methoden zur Ermittlung der Temperaturverteilung einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen u.a. in die Formation eingebrachte Wärmemengen sowie die aus der Formation abgeführte Wärmemengen berücksichtigt.

Das erfindungsgemäße Verfahren kann insbesondere bei Erdöllagerstätten mit einer durchschnittlichen Permeabilität von 10 mD bis 4 D, bevorzugt 100 mD bis 2 D und besonders bevorzugt 200 mD bis 1 D angewandt werden. Die Permeabilität einer Erdölformation wird vom Fachmann in der Einheit "Darcy" (abgekürzt "D" bzw. "mD" für "Millidarcy") angegeben, und sie kann aus der Fließgeschwindigkeit einer flüssigen Phase in der Erdölformation in Abhängigkeit der angelegten Druckdifferenz bestimmt werden. Die Fließgeschwindigkeit kann in Kernflutversuchen mit der Formation entnommenen Bohrkemen bestimmt werden. Einzelheiten hierzu finden sich beispielsweise in K. Weggen, G. Pusch, H. Rischmüller in "Oil and Gas", Seiten 37 ff., Ulmann's Encyclopedia of Industrial Chemistry, Online-Ausgabe, Wiley-VCH, Weinheim 2010*.* Für den Fachmann ist klar, dass die Permeabilität in einer Erdöllagerstätte nicht homogen sein muss, sondern im Allgemeinen eine gewisse Verteilung aufweist, und es sich dementsprechend bei der Angabe der Permeabilität einer Erdöllagerstätte um eine durchschnittliche Permeabilität handelt.

Das in der Lagerstätte befindliche Erdöl weist eine Viskosität η_{Öl} von mindestens 3 mPa*s, insbesondere mindestens 10mPa*s (gemessen bei der Lagerstättentemperatur T_{L}) auf. Die Viskosität hängt -neben der Temperatur- unter anderem von der Art des Erdöls ab. Sie kann je nach der Art des Öls auch 10 000 mPa*s und mehr betragen. Bevorzugt beträgt die Viskosität η_{Öl} bis 30000 mPa*s, besonders bevorzugt 100 bis 10 000 mPa*s und ganz besonders bevorzugt 20 mPa*s bis 1000 mPa*s (jeweils gemessen bei T_{L}).

Neben dem Öl enthält die Erdölformation mehr oder weniger salzhaltiges Lagerstättenwasser. Bei den Salzen im Lagerstättenwasser kann es sich insbesondere um Alkalimetallsalze sowie Erdalkalimetallsalze handeln. Beispiele typischer Kationen umfassen Na⁺, K⁺, Mg²⁺ oder Ca²⁺ und Beispiele typischer Anionen umfassen Chlorid, Bromid, Hydrogencarbonat, Sulfat oder Borat. Der Salzgehalt des Lagerstättenwassers beträgt erfindungsgemäß 20 000 ppm bis 350 000 ppm (Gewichtsanteile bezüglich der Summe aller Komponenten des Lagerstättenwassers), beispielsweise 100 000 ppm bis 250 000 ppm. Die Menge an Erdalkalimetallionen, insbesondere an Mg²⁺ und Ca²⁺-Ionen kann 1000 bis 53 000 ppm betragen.

In der Regel enthält das Lagerstättenwasser ein oder mehrere Alkalimetallionen, insbesondere Na⁺-Ionen. Daneben können auch noch Erdalkalimetallionen vorhanden sein, wobei das Gewichtsverhältnis Alkalimetallionen / Erdalkalimetallionen in der Regel ≥ 2, bevorzugt ≥ 3 ist. Als Anionen sind in der Regel zumindest eines oder mehrere Halogenid-Ionen, insbesondere zumindest Chloridionen vorhanden. In der Regel beträgt die Menge an Cl- zumindest 50 Gew. %, bevorzugt mindestens 80 Gew. % bezüglich der Summe aller Anionen.

### Eingesetzte Glucane

Unter "Glucanen" versteht der Fachmann Homopolysaccharide, welche ausschließlich aus Glucoseeinheiten aufgebaut sind. Erfindungsgemäß wird eine spezielle Klasse von Glucanen eingesetzt, und zwar solche Glucane, die eine Hauptkette aus β-1,3-glykosidisch verknüpften Glucoseeinheiten sowie β-1,6-glykosisch daran gebundenen Seitengruppen aus Glucoseeinheiten umfassen. Bevorzugt bestehen die Seitengruppen aus einer einzigen β-1,6-glykosidisch angebundenen Glucoseeinheit, wobei -statistisch gesehen- jede dritte Einheit der Hauptkette mit einer weiteren Glucoseeinheit β-1,6-glykosisch verknüpft ist.

Derartige Glucane sekretierende Pilzstämme sind dem Fachmann bekannt. Beispiele umfassen *Schizophyllum commune, Sclerotium rolfsii, Sclerotium glucanicum, Monilinia fructigena, Lentinula edodes oder Botrytis cinera.* Geeignete Pilzstämme sind beispielsweise in EP 271 907 A2 sowie EP 504 673 A1, jeweils Anspruch 1, genannt. Bevorzugt handelt es sich bei den eingesetzten Pilzstämmen um *Schizophyllum commune* oder *Sclerotium rolfsii* und besonders bevorzugt um *Schizophyllum commune,* welcher ein Glucan sekretiert, bei dem an eine Hauptkette aus β-1,3-glykosidisch verknüpften Glucoseeinheiten -statistisch gesehen- jede dritte Einheit der Hauptkette mit einer weiteren Glucoseeinheit β-1,6-glykosisch verknüpft ist; d.h. bevorzugt handelt es sich bei dem Glucan um das so genannte Schizophyllan. Typische Schizophyllane weisen ein gewichtsmittleres Molekulargewicht M_{w} von ca. 1,5 bis ca. 25*10⁶ g/mol, insbesondere 2 bis ca. 15*10⁶ g/mol auf.

Die Herstellung derartiger Glucane ist prinzipiell bekannt. Zur Herstellung werden die Pilze in einem geeigneten wässrigen Nährmedium fermentiert. Die Pilze sekretieren im Zuge der Fermentation die oben genannte Klasse von Glucanen in die wässrige Fermentationsbrühe, und aus der wässrigen Fermentationsbrühe kann eine wässrige Polymerlösung abgetrennt werden.

Verfahren zur Fermentation derartiger Pilzstämme sind dem Fachmann prinzipiell bekannt, beispielsweise aus EP 271 907 A2, EP 504 673 A1, DE 40 12 238 A1, WO 03/016545 A2 sowie *"*Udo Rau, "Biosynthese, Produktion und Eigenschaften von extrazellulären Pilz-Glucanen", Habilitationsschrift, Technische Universität Braunschweig, Shaker Verlag Aachen 1997*",* welche jeweils auch geeignete Nährmedien nennen. Bei den Fermentationsanlagen kann es sich um kontinuierlich oder diskontinuierlich arbeitende Anlagen handeln.

Aus der Fermentationsbrühe, welche gelöste Glucane sowie Biomasse (pilzliche Zellen sowie ggf. Zellbestandteile) enthält, wird schließlich eine wässrige, Glucane enthaltende Lösung abgetrennt, wobei eine wässrige Fermentationsbrühe verbleibt, in der die Biomasse eine höhere Konzentration aufweist als vorher. Die Abtrennung kann insbesondere mittels ein- oder mehrstufiger Filtration oder mittels Zentrifugation erfolgen. Selbstverständlich können auch mehrere Abtrennschritte miteinander kombiniert werden.

Bei der Abtrennung sollte darauf geachtet werden, dass die Biomasse möglichst vollständig zurückgehalten wird. Im Filtrat verbleibende Biomasse kann feine Poren der Erdölformation verstopfen. Die Qualität des Filtrats kann in prinzipiell bekannter Art und Weise mittels des so genannten Millipore-Filtrations-Verhältnis' (Millipore filtration ratio; MPFR-Wert) bestimmt werden. Die Messvorschrift ist in EP 271 907 B1, Seite 11, Zeilen 24 bis 48 geschildert.
Der MPFR-Wert der Filtrate sollte möglichst niedrig sein, und insbesondere 1,001 bis 3, bevorzugt 1,01 bis 2,0 betragen.

Die Filtration kann bevorzugt mittels Querstromfiltration, insbesondere Querstrom-Mikrofiltration vorgenommen werden. Das Verfahren der Querstrom-Mikrofiltration ist dem Fachmann prinzipiell bekannt und wird zum Beispiel in *"*Melin, Rautenbach, Membranverfahren, Springer-Verlag, 3. Auflage, 2007, Seite 309 bis Seite 366' beschrieben. Unter "Mikrofiltration" versteht der Fachmann hierbei, die Abtrennung von Partikeln einer Größe zwischen ca. 0,1 µm bis ca.10 µm.

Bei der Querstrom-Filtration, auch Cross-Flow-Filtration genannt, wird -beispielsweise durch eine geeignete Umwälzpumpe- eine Strömung der zu filtrierenden Flüssigkeit parallel zur Oberfläche der als Filtrationsmaterial eingesetzten Membran aufgebracht. Die Filtermembran wird also ständig von einem Flüssigkeitsstrom überströmt, und hierdurch wird die Bildung von Ablagerungen auf der Membranoberfläche verhindert oder zumindest vermindert.
Das erhaltene Filtrat kann bevorzugt als solches für das erfindungsgemäße Verfahren eingesetzt werden. Es kann aber beispielsweise noch weiter aufkonzentriert werden, oder aber es kann das Glucan aus der Lösung abgetrennt und als Feststoff isoliert werden, beispielsweise durch Ausfällen mittels eines geeigneten Lösemittels gefolgt von Trocknen.

Bevorzugt sollte die Fermentationen so gefahren werden, dass die Konzentration der herzustellenden Glucane in der zu filtrierenden Fermentationsbrühe mehr als 3 g/l, bevorzugt mindestens 5 g/l und besonders bevorzugt mindestens 8 g/l beträgt. Die Konzentration kann insbesondere 5 g/l bis 30 g/l und beispielsweise 8 g/l bis 20 g/l betragen.

### Verfahrensschritt (1)

Zur Ausführung der Erfindung wird in einem ersten Verfahrensschritt (1) ein Konzentrat (K) eines Glucans der oben geschilderten Struktur in Wasser mit einer Konzentration von mehr als 3 g/l bis 30 g/l bereit gestellt. Insbesondere beträgt die Konzentration des Konzentrats (K) 5 g/l bis 30 g/l, bevorzugt 5 g/l bis 25 g/l, besonders bevorzugt 8 g/l bis 22 g/l und beispielsweise 10 g/l bis 20 g/l.

Ein solches Konzentrat (K) kann in einer ersten Ausführungsform der Erfindung hergestellt werden, indem man festes Glucan in der gewünschten Konzentration löst. Bei dieser Ausführungsform der Erfindung kann das Herstellen des Konzentrats vorteilhaft vor Ort, d.h. auf dem Ölfeld oder zumindest in der Nähe des Ölfelds erfolgen. Feste Glucane werden hierzu als Trockenprodukt beispielsweise in großen Säcken ("big bags") angeliefert. Feste Glucane können insbesondere nach der oben geschilderten Methode hergestellt werden. Zum Lösen kann das Pulver beispielsweise manuell oder über ein Förderband über einen Trichter zusammen mit Wasser in einen gerührten Tank gegeben werden. Zur Verbesserung der Benetzung und des Lösungsvorgangs kann zusätzlich ein Tensid zugesetzt werden.

Bei dem zum Lösen verwendeten Wasser kann es sich um Süßwasser oder um salzhaltiges Wasser handeln, beispielsweise um Grundwasserhorizonten entnommenem Süßwasser oder um Lagerstättenwasser. Bei Offshore-Anwendungen kann zum Lösen insbesondere Seewasser oder aufbereitetes Seewasser, also Seewasser, dem teilweise Mineralien und/oder Schwefelverbindungen entzogen wurden, verwendet werden. Wird mit dem Vorhandensein von Partikeln im Wasser gerechnet, so sollte dieses gefiltert werden.

Die Herstellung des Konzentrats (K) wird vorgenommen, indem man Pilzstämme, welche Glucane der genannten Struktur sekretieren, in einem wässrigen Nährmedium fermentiert und eine wässrige Lösung des gebildeten Glucans mit einer Konzentration von mehr als 3 g/l aus der wässrigen, Glucane und Biomasse enthaltenden Fementationsbrühe abtrennt. Einzelheiten zur Herstellmethode sowie bevorzugte Herstellmethoden wurden bereits oben dargestellt. Das Filtrat wird als solches für das Verfahren verwendet. Mit anderen Worten gesagt wird bei dieser Methode ein Konzentrat (K) aus der Fermentationsbrühe gewonnen, ohne dass man feste Glucane isoliert. Man vermeidet hierdurch Qualitätsverluste, die durch das Isolieren eines hochmolekularen Polymers und das erneute Auflösen des hochmolekularen Polymers auftreten können.

Die Herstellung des Konzentrats kann bei dieser Ausführungsform auf dem Ölfeld oder in der Nähe des Ölfelds stattfinden, oder sie kann in einer fernab vom Ölfeld befindlichten Produktionsstätte stattfinden. Sofern die Herstellung des Glucans in einer vom Ölfeld entfernten Produktionsanlage stattfindet, wird das erhaltene Konzentrat (K) anschließend zum Ölfeld transportiert. Um Transportaufwand zu sparen, beträgt die Konzentration des Konzentrats (K) bevorzugt mindestens 5 g/l und besonders bevorzugt mindestens 8 g/l. Die Konzentration kann insbesondere 5 g/l bis 25 g/l und beispielsweise 8 g/l bis 22 g/l betragen.

Die erhaltenen Konzentrate (K) können vor der weiteren Verarbeitung in geeigneten Flüssigkeitslagern wie beispielsweise Tanks zwischengelagert werden.

### Verfahrensschritt (2)

In Verfahrensschritt (2) wird die zum Injizieren vorgesehene wässrige Formulierung (F) durch Verdünnen des gemäß Schritt (1) bereitgestellten Konzentrats (K) mit Wasser hergestellt. Optional können in diesem Schritt noch weitere Additive, beispielsweise Biozide oder Sauerstofffänger zugemischt werden.

Die Herstellung der wässrigen Formulierung (F) wird vor Ort vorgenommen, d.h. auf dem Ölfeld oder zumindest in der Nähe des Ölfelds. Größere Ölfelder an Land haben häufig zentrale Anlagen, in denen die Aufarbeitung und Lagerung des geförderten Öls erfolgt. Gefördertes Erdöl wird von den einzelnen Förderstellen zu den zentralen Aufarbeitungsanlegen via Pipeline angeliefert, und dort wird die Wasser-Öl-Trennung vorgenommen. Ebenso können zu injizierende Flüssigkeiten, im einfachsten Falle abgetrenntes Lagerstättenwasser, von der zentralen Anlage aus in Pipelines zu den Injektionsbohrungen gefördert werden. Auch solche zentralen Anlagen sollen als "vor Ort" befindlich eingestuft werden. Bei Offshore-Plattformen bedeutet "Herstellung vor Ort" naturgemäß, dass die Herstellung auf der Plattform erfolgt.

Zum Verdünnen kann Süßwasser aber auch Salze enthaltendes Wasser verwendet werden. Selbstverständlich kann es sich um Mischungen verschiedener Salze handeln.

In einer Ausführungsform der Erfindung kann Meerwasser oder teilentsalztes Meerwasser zum Verdünnen des Konzentrats (K) verwendet werden. In einer weiteren Ausführungsform der Erfindung kann gefördertes Lagerstättenwasser verwendet werden, welches auf diese Art und Weise wieder verwendet wird. Bei Förderplattformen im Meer wird die Formulierung in der Regel in mit Meerwasser oder mit teilentsalztem Meerwasser verdünnt.

Die Gesamtmenge aller Salze in der wässrigen Formulierung (F) richtet sich nach der Art des zum Ansetzen und zum Verdünnen des Konzentrats (K) verwendeten Wassers. Die Menge der Salze kann bis zu 350 000 ppm (Gewichtsanteile), bezüglich der Summe aller Komponenten der Formulierung betragen. Derartig hohe Werte können erreicht werden, wenn sowohl zum Ansetzen als auch Verdünnen des Konzentrats (K) stark salzhaltiges Lagerstättenwasser verwendet wird. In der Regel beträgt die Salinität der Formulierung (F) 20 000 ppm bis 350 000 ppm, insbesondere 20 000 ppm bis 250 000 ppm. Sofern Meerwasser zum Verdünnen des Konzentrats (K) verwendet wird, beträgt der Salzgehalt in der Regel 20 000 ppm bis 50 000 ppm und sofern Formationswasser verwendet wird in der Regel 100 000 ppm bis 250 000 ppm. Die Menge an Erdalkalimetallionen kann insbesondere1000 bis 53 000 ppm betragen. Sofern Alkali- und Erdalkalimetallionen vorhanden sind, beträgt das Gewichtsverhältnis Alkalimetallionen / Erdalkalimetallionen in der Regel ≥ 2, bevorzugt ≥ 3. Als Anionen sind in der Regel zumindest eines oder mehrere Halogenid-Ionen, insbesondere zumindest Cl⁻ vorhanden. In der Regel beträgt die Menge an Cl⁻ zumindest 50 Gew. %, bevorzugt mindestens 80 Gew. % bezüglich der Summe aller Anionen.

Die Einsatzkonzentration der wässrigen Formulierung (F) beträgt 0,05 g/l bis 3 g/l, bevorzugt 0,08 g/l bis 0,5 g/l und besonders bevorzugt 0,1 g/l bis 0,4 g/l.

Die Viskosität η_{F} der wässrigen Formulierung (F) beträgt erfindungsgemäß mindestens 3 mPa*s, bevorzugt mindestens 10 mPa*s (jeweils gemessen bei 7 s⁻¹ und T_{L}), wobei die Viskosität der wässrigen Formulierung η_{F} im Vergleich zu der Viskosität des Öls η_{Öl} (gemessen bei T_{L}) so gewählt wird, dass η_{F} ≤ η_{Öl} ist. Die Viskosität der wässrigen Formulierung kann also durchaus kleiner sein als die Viskosität der Ölphase. Auch wenn die wässrige Formulierung (F) eine geringere Viskosität aufweist als die Ölphase, kann bereits eine Erhöhung der Ölausbeute gegenüber der Verwendung von reinem Wasser erzielt werden. In einer Ausführungsform der Erfindung gilt η_{F} ≤ η_{Öl} und in einer weiteren Ausführungsform der Erfindung liegt η_{F} im Bereich von 0,1 η_{Öl} bis 0,99 η_{Öl}. Die Einstellung der gewünschten Viskosität kann leicht über die Konzentration des Glucans erfolgen.

Neben den bislang genannten Komponenten, kann die eingesetzte, wässrige Formulierung (F) noch zusätzliche Komponenten bzw. Additive enthalten.

Beispiele zusätzlicher Komponenten umfassen ein oder mehrere Biozide, welche zur Vermeidung von Polymerabbau durch Mikroorganismen zugesetzt werden können. Weiterhin können Sauerstofffänger wie beispielsweise Natriumbisulfit zugesetzt werden. In einer weiteren Variante können zusätzlich basische Verbindungen wie beispielsweise Alkalimetallhydroxide zugesetzt werden.

Weitere Beispiele zusätzlicher Komponenten umfassen von den eingesetzten Glucanen chemisch verschiedene, verdickend wirkende Polymere, beispielweise synthetische Polymere oder Biopolymere.

Weiterhin kann es sich bei zusätzlichen Komponenten um Tenside handeln, insbesondere nichtionische, anionische oder zwitterionische Tenside. Durch den Zusatz von Tensiden lässt sich die entölende Wirkung weiter steigern. Tenside verringern die Grenzflächenspannung zwischen der wässrigen und der Ölphase und ermöglichen dadurch eine zusätzliche Mobilisierung von Erdöl. In einer bevorzugten Ausführungsform der Erfindung handelt es sich um anionische und/oder nichtionische Tenside.

Hierbei kann es sich prinzipiell um beliebige nichtionische, anionische oder zwitterionische Tenside, bevorzugt nichtionische und/oder anionische Tenside handeln, vorausgesetzt, sie sind für die tertiäre Erdölförderung grundsätzlich geeignet. Dem Fachmann sind entsprechende Tenside bekannt. Geeignete Tenside für die tertiäre Erdölförderung umfassen als hydrophobe Molekülteile insbesondere Kohlenwasserstoffreste, bevorzugt aliphatische mit 10 bis 36 Kohlenstoffatomen, bevorzugt 12 bis 36 Kohlenstoffatomen und besonders bevorzugt 16 bis 36 Kohlenstoffatomen.

Beispiele derartiger Tenside umfassen anionische Tenside mit Sulfonsäuregruppen wie Olefinsulfonate wie α-Olefinsulfonate oder i-Olefinsulfonate, Paraffinsulfonate oder Alkylbenzolsulfonate, nichtionische Tenside wie Alkylpolyalkoxylate, insbesondere Alkylpolyethoxylate, Alkylpolyglucoside. Ein Beispiel zwitterionischer Tenside sind Alkylamidopropylbetaine. Weiterhin kann es sich um Tenside handeln, welche sowohl nichtionische hydrophile Gruppen als auch anionische hydrophile Gruppen umfassen, wie beispielsweise Alkylethersulfonate, Alkylethersulfate oder Alkylethercarboxylate.

Weiterhin kann es sich auch um oligomere oder polymere Tenside handeln. Beispiele derartiger polymerer Tenside umfassen amphiphile Block-Copolymere, die mindestens einen hydrophilen und mindestens einen hydrophoben Block umfassen. Beispiele umfassen Polypropylenoxyd-Polyethylenoxyd-Block-Copolymere, Polyisobuten-Polyethylenoxyd-Block-Copolymere sowie Kammpolymere mit Polyethylenoxid-Seitenketten und einer hydrophoben Hauptkette, wobei die Hauptkette bevorzugt im Wesentlichen Olefine oder (Meth)acrylate als Baueinheiten umfasst.

Die genannten Polymere und Tenside können Bestandteile der Formulierung (F) sein, sie können aber auch in Form von wässrigen Formulierungen separat von der Formulierung (F) injiziert werden.

Zur Ausführung von Verfahrensschritt (2) werden das Konzentrat (K), das zum Verdünnen eingesetzte Wasser sowie weitere, optional eingesetzte Komponenten bzw. Additive miteinander vermischt. Dies erfolgt in der Regel unter Verwendung eines oder mehrerer geeigneter Mischer, beispielsweise statischer Mischer oder dynamischer Mischer. Bevorzugt wird Verfahrensschritt (2) unter Verwendung eines oder mehrerer statischer Mischer durchgeführt. Die Formulierung (F) kann vor der Verwendung optional noch einmal filtriert werden, um die Lösung von eventuell noch vorhandenen Agglomeraten oder groben Partikeln zu befreien. Dies soll ein Verstopfen der Erdölformation verhindern.

Verfahrensschritt (2) sollte hierbei so vorgenommen werden, dass Sauerstoffeintrag in die wässrige Formulierung (F) nach Möglichkeit unterbunden oder zumindest stark reduziert wird. Eingetragener Sauerstoff kann unter den Bedingungen der Formation unter Umständen einen Viskositätsabbau verursachen oder zumindest begünstigen. In einer bevorzugten Ausführungsform der Erfindung sollte Verfahrensschritt (2) daher unter sauerstofffreien Bedingungen durchgeführt werden. Dies kann vor allem durch Verwenden geschlossener Apparaturen sowie gegebenenfalls die Verwendung von Schutzgas erreicht werden. Bevorzugt sollte der Gehalt an Sauerstoff in der Formulierung (F) vor dem Injizieren 50 ppb nicht überschreiten. Eventuell doch eingetragener Sauerstoff kann durch Zugabe von Sauerstoffbindern zur Formulierung (F) entfernt werden.

### Verfahrensschritt (3)

In Verfahrensschritt (3) wird die wässrige Formulierung (F) in die Erdölformation injiziert und Rohöl durch mindestens eine Produktionsbohrung entnommen.

Das Injizieren der erfindungsgemäßen, wässrigen Formulierung kann mittels üblicher Vorrichtungen vorgenommen werden. Die Formulierung kann mittels üblicher Pumpen durch eine oder mehrere Injektionsbohrungen in die Erdölformation injiziert werden. Das Injizieren kann vorzugsweise mit Verdrängerpumpen ("positive displacement pumps") erfolgen. Dabei können am Bohrlochkopf Drücke von mehreren 10 bis über 100 bar auftreten. Hierbei ist zu beachten, dass in verschiedenen Ländern gesetzliche Vorschriften existieren, welche den Injektionsdruck beim Eintritt in die Gesteinsformation auf das 1,1-fache des ursprünglichen Lagerstättendrucks begrenzen. Dieses Limit soll verhindern, dass ein künstliches Aufbrechen der Gesteinsformation erfolgt.

Die Injektionsbohrungen sind üblicherweise mit einzementierten Stahlrohren ausgekleidet, und die Stahlrohre sind an der gewünschten Stelle perforiert. Die Formulierung tritt durch die Perforation aus der Injektionsbohrung in die Erdölformation ein. Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Formation eintritt. Die Scherbelastung beim Eintritt in die Formation kann vom Fachmann in prinzipiell bekannter Art und Weise auf Basis des Gesetz' von Hagen-Poiseuille unter Verwendung der beim Eintritt in die Formation durchströmten Fläche, dem mittleren Porenradius und dem Volumenstrom errechnet werden. Die durchschnittliche Permeabilität der Formation kann in prinzipiell bekannter Art und Weise durch Messungen an Bohrkemen ermittelt werden. Die Scherbelastung ist naturgemäß umso größer, je größer der in die Formation injizierte Volumenstrom an wässriger Formulierung (F) ist.

Die Geschwindigkeit der Injektion kann vom Fachmann je nach den Verhältnissen in der Formation festgelegt werden. Bevorzugt beträgt die Scherrate beim Eintritt der wässrigen Polymerformulierung in die Formation mindestens 30000 s⁻¹, bevorzugt mindestens 60000 s⁻¹ und besonders bevorzugt mindestens 90000 s⁻¹.

Das durch die Produktionsbohrungen geförderte Rohöl kann auf dem Fachmann prinzipiell bekannte Art und Weise aufbereitet werden. Insbesondere wird das Rohöl in eine im Wesentlichen Lagerstättenwasser enthaltende Phase und eine im Wesentlichen Öl umfassende Phase aufgetrennt. Das Öl kann anschließend in eine Raffinerie transportiert werden. Das abgetrennte Lagerstättenwasser kann anschließend in einem weiteren Aufarbeitungsschritt von Ölresten befreit werden. Dies kann insbesondere Offshore erforderlich sein, wenn das Wasser anschließend in Meer abgelassen werden soll.

In einer bevorzugten Ausführungsform verwendet man zumindest einen Teil des abgetrennten Lagerstättenwassers zum Verdünnen des Konzentrats (K) in Verfahrensschritt (2). Hierdurch kann ein weitgehend geschlossener Wasserkreislauf realisiert werden.

Das erfindungsgemäße Verfahren kann zu unterschiedlichen Zeitpunkten einer Lagerstättenentwicklung erfolgen. Beispielsweise kann das erfindungsgemäße Verfahren im Anschluss an Wasserfluten durchgeführt werden. Weiterhin kann es im Anschluss an ein Tensidfluten der Lagerstätte durchgeführt werden. Beim Tensidfluten wird eine geeignete wässrige Formulierung von Tensiden in die Formation injiziert. Durch die Reduktion der Wasser-Öl-Grenzflächenspannung können Tenside die Mobilisierung von Erdöl fördern. Es ist aber auch möglich, das Verfahren direkt im Anschluss an das Ende der primären Erdölförderung durchzuführen, d.h. ohne zuvor noch Wasserfluten durchzuführen, oder -sofern eine primäre Förderung aufgrund der Gegebenheiten in der Lagerstätte nicht möglich ist, direkt im Anschluss an das Erschließen der Lagerstätte. Mit dem Verzicht auf Wasserfluten kann man "Fingering" bzw. zu starkes "Fingering" unter Umständen von vornherein vermeiden.

Die unter wirtschaftlichen Erwägungen zu erzielende kumulative Erdölförderung aus einer Erdöllagerstätte wird auch als Endausbeute bezeichnet. Diese Endausbeute geteilt durch die ursprünglich in der Erdöllagerstätte vorhandene Gesamterdölmenge (= initialer Ölinhalt) wird auch aus Endausbeutegrad oder -faktor bezeichnet.

Mittels des erfindungsgemäßen Verfahren lässt sich unter Verwendung von Glucanen auch bei sehr heißen und hochsalinen Erdöllagerstätten noch eine signifikante Steigerung der Erdölausbeute erreichen, wenn übliche Polymere für die tertiäre Erdölförderung bereits nicht mehr zu zufriedenstellenden Ergebnissen führen.

Die folgenden Beispiele sollen die Erfindung näher illustrieren:
Für die nachfolgenden Versuche wurden die folgenden verdickenden Polymere eingesetzt:

### Polymer 1

### Glucan mit einer β-1,3-glykosidisch verknüpften Hauptkette sowie β-1,6-glykosidisch gebunde-nen Seitengruppen (erfindungsgemäß)

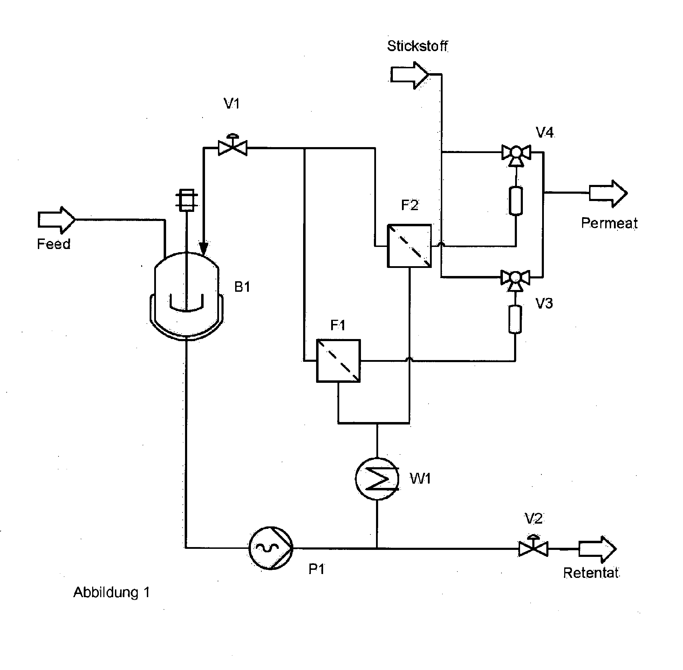

Die verwendete Apparatur zur Herstellung des Glucans ist in Abbildung 1 dargestellt. Sie bestand aus einem gerührten Doppelmantel-Vorlagebehälter B1 mit einem Volumen von 120 Liter, der Exzenterschneckenpumpe P1, dem Rohrbündel-Wärmetauscher W1, dem Druckhalteventil V1 und den beiden Filtermodulen F1 und F2. Die Filtermodule F1 und F2 wurden mittels der Dreiwegehähne V3 und V4 mit Permeat im Abstand von jeweils 300 s mit jeweils 200 ml Permeat zurückgespült, der Druck des Stickstoffes betrug 7 bar. Über den Doppelmantel des Behälters B1 und den Wärmetauscher W1 wurde der Inhalt der Querstromfiltrationsanlage auf 24°C gekühlt.

In den Filtermodulen F1 und F2 wurde eine symmetrische Rohrmembran eingesetzt, und zwar ein 5-Kanal-Element der Firma TAMI aus der Keramik ATZ (Alumina/Titania/Zirconia). Die Porengröße D90 der Membran betrug 3,5 µm. Die Membran war symmetrisch aufgebaut und besaß keine Trennschicht oder Zwischenschichten. Die Länge des Membranrohres war 1 m, der Außendurchmesser war 20 mm. Die Membranfläche eines Modulelementes betrug 0,11 m². Der hydraulische Durchmesser eines Kanals betrug 6 mm.

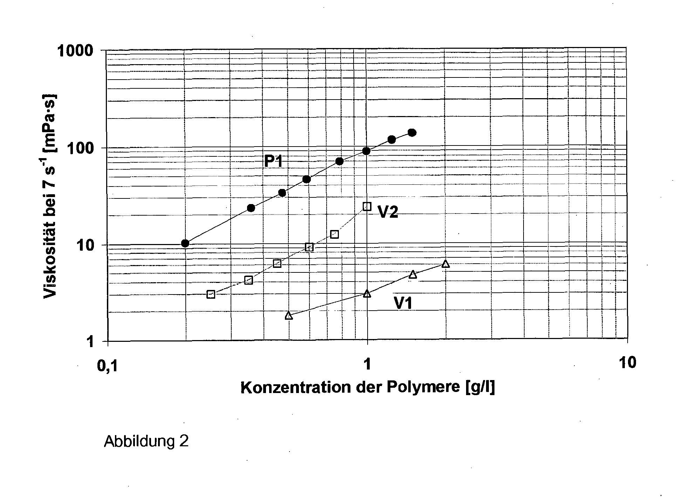

Für die Versuche wurde *Schizophyllum commune* verwendet, und zwar wurde das Schizophyllan wie *in "*Udo Rau, Biopolymers, Hrsg A. Steinbüchel, Verlag WILEY-VCH, Volume 6, Seiten 63 bis 79*"* beschrieben in einer Batch-Fermentation hergestellt. Die Fermentationszeit betrug 96 Stunden. 99,6 kg dieser Fermentationsbrühe (=Feed) wurde in den Behälter B1 (Abb. 2) eingefüllt und 45 Minuten lang bei 4 bar Druck mit einer Umwälzmenge von 7 m³/h mittels der Pumpe P1 umgewälzt. Der Inhalt des Behälters wurde analysiert und ein Gehalt von 9,8 Gramm Schizophyllan pro Liter ermittelt.

Dann wurde die Umwälzmenge auf 5,1 m³/h eingestellt und ein Transmembrandruck von 1,1 bar angelegt. Die Überströmgeschwindigkeit war 5 m/s. Das aus den Filtermodulen austretende Permeat wurde gesammelt und gewogen. Während der ersten 10 Minuten des Experimentes wurden 0,75 kg Permeat erhalten. Dies entspricht einem Permeatfluss von 20,4 kg/h/m2. Der Transmembrandruck war 2,9 bar. Die Filtration wurde 16 Stunden lang betrieben und in dieser Zeit 6,18 kg Permeat erhalten.

Das gesammelte Permeat wurde analysiert und ein Glucangehalt von 6,7 Gramm pro Liter gefunden. Der MPFR-Wert des Permeates betrug 2,8.

Das erhaltene Konzentrat wurde für die Versuche auf die jeweils gewünschte Temperatur verdünnt.

### Vergleich polymer 1:

Handelsübliches, synthetisches Polymer aus ca. 75 mol % Acrylamid und 25 mol % des Sulfonsäuregruppen-haltigen Monomers 2-Acrylamido-2-methylpropan-sulfonsäure (Na-Salz), gewichtsmittleres Molekulargewicht M_{w} von ca. 11 Mio. g/mol

### Vergleichspolymer 2:

Handelsübliches Biopolymer Xanthan (CAS 11138-66-2) Biopolymer, hergestellt durch Fermentation mit dem Bakterium *Xanthamonas* Campestris) mit einem gewichtsmittleren Molekulargewicht M_{w} von ca. 2 Mio. g/mol.

### Vergleichspolymer 3:

Handelsübliches Biopolymer Diutan (Biopolymer, hergestellung durch Fermentation mit *Sphingomonas sp.*)

Mit dem erfindungsgemäßen Glucan sowie den Vergleichspolymeren wurden die nachfolgend beschriebenen Viskositätsmessungen durchgeführt.

**Durchführung der Viskositätsmessungen:**

| | |
|---|---|
| Messinstrument: | Schubspannungskontrolliertes Rotationsviskosimeter Physica MCR301 Druckzelle mit Doppelspalt-Geometrie DG 35/PR/A1 |
| Messbereich: | 25 ° bis 170 °C, wie jeweils angegeben |
| Scherrate: | wie jeweils angegeben |

Das komplette Messsystem inklusive der Spritze, mit der die Probe gezogen und in das Rheometer eingebracht wird, wurde mit Stickstoff gespült. Während der Messung war die Messzelle mit 8 bar Stickstoff beaufschlagt.

### Versuchsreihe 1:

Es wurde die Viskosität von Lösungen der Polymere P1, V1 und V2 bei verschiedenen Konzentrationen von 0,2 g/l bis 2 g/l gemessen. Die Messungen wurden in synthetischem Lagerstättenwasser durchgeführt. Die Polymere werden hierzu in überkonzentriertem Salzwasser gelöst oder -für den Fall, dass das Polymer schon als Lösung vorliegt- eine Lösung des Polymers mit überkonzentriertem Salzwasser vermischt und die erhaltene Salzlösung anschließend verdünnt, so dass sich die unten abgegebenen Konzentrationen ergeben. Die Messungen von P1 und V2 wurden bei 54°C und die Messung V1 bei 40°C durchgeführt.

**Zusammensetzung des Lagerstättenwassers (pro Liter):**

| | |
|---|---|
| CaCl₂ | 42600 mg |
| MgCl₂ | 10500 mg |
| NaCl | 132000 mg |
| Na₂SO₄ | 270 mg |
| NaBO₂*4 H₂O | 380 mg |
| Gesamtsalinität | 185750 mg |

Die Ergebnisse sind in Abbildung 2 zusammengestellt. Abbildung 2 zeigt, dass mit dem Glucan P1 die beste Viskositätseffizienz in Lagerstättenwasser erzielt wird, d.h. die proben ergeben bei gegebener Konzentration die höchste Viskosität.

### Versuchsreihe 2:

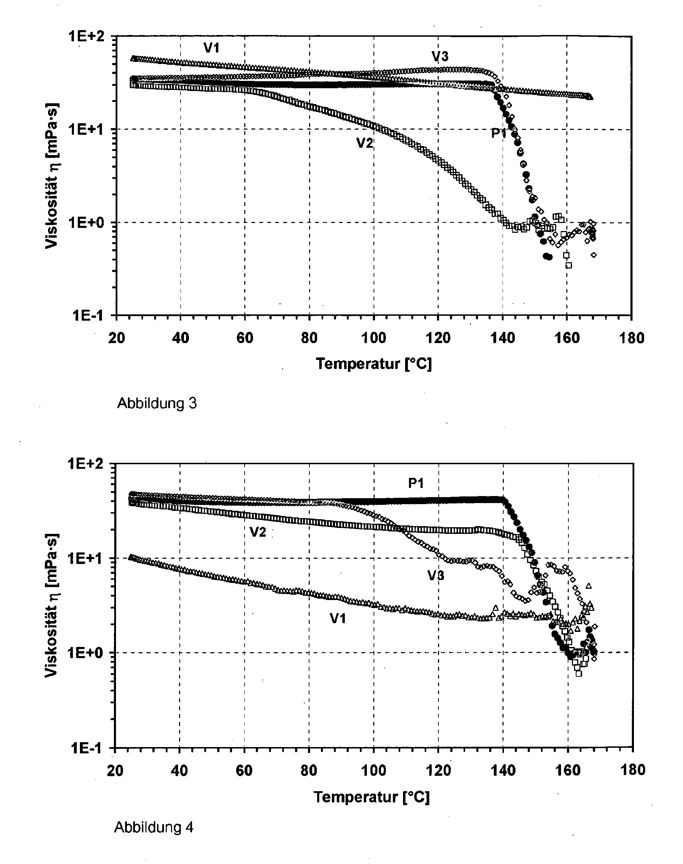

Es wurde die Viskosität von wässrigen Lösungen der Polymere P1, V1, V2 und V3 in Reinstwasser in einer Konzentration von jeweils 3 g/l bei einer Scherrate von 100 s⁻¹ im Temperaturbereich von 25°C bis 170°C gemessen. Hierzu wurde die Lösung des Polymers P1 entsprechend verdünnt, und die Polymere V1, V2 und V3 wurden in der entsprechenden Konzentration in Wasser gelöst. Die Proben wurden bei Raumtemperatur in die Messzelle gespritzt und die Heizrate betrug 1°C/min. Die Ergebnisse sind in Abbildung 3 dargestellt.

### Versuchsreihe 3:

Es wurde wie in Versuchsreihe 1 vorgegangen, nur wurde zum Ansetzen der Lösungen nicht Reinstwasser sondern ein synthetisches Lagerstättenwasser eingesetzt. Die Ergebnisse sind in Abbildung 4 zusammengefasst.

### Kommentar zu Versuchsreihen 2 und 3:

Die Versuche zeigen die Vorteile des erfindungsgemäß verwendeten Glucans P1 im Vergleich zu den Vergleichspolymeren V1, V2 und V3 bei hoher Temperatur und hoher Salzkonzentration. Die Viskosität des Glucans P1 bleibt sowohl in salzhaltigem Wasser als auch in Reinstwasser bei Temperaturen von 25 bis 140°C konstant und beginnt erst dann langsam abzunehmen. In Reinstwasser zeigen sowohl das synthetische Polymer V1 (Copolymer aus Acrylamid und 2-Acrylamido-2-methylpropan-sulfonsäure) als auch das Biopolymer V3 ein ähnliches Verhalten, während das Biopolymer V2 deutlich schlechter ist. In Lagerstättenwasser sind aber bei höheren Temperaturen alle Vergleichpolymere V1, V2 und V3 schlechter als das Glucan P1.

### Versuchsreihe 4:

Es wurde die Viskosität der Polymere P1, V1 und V1 in Abhängigkeit der Scherrate in Gegenwart verschiedener Salze und unterschiedlicher Salzmengen gemessen, und zwar

| | |
|---|---|
| 4-1 | 0,1 g/l NaCl |
| 4-2 | 120 g/l NaCl |
| 4-3 | 0,1 g/l CaCl₂ |
| 4-4 | 120 g/l CaCl₂ |
| 4-5 | Lagerstättenwasser obiger Zusammensetzung |

| | |
|---|---|
| Polymerkonzentration: | jeweils 3 g/L |
| Messtemperatur: | 25°C |
| Messinstrument: | Schubspannungskontrolliertes Rotationsviskosimeter Physica MCR Couette Geometrie CC 27 |
| Radius des Messkörpers: | 13.33 mm |
| Radius des Messbechers : | 14.46 mm |

Die Proben wurden in stationärer Scherung beginnend bei großen Scherraten hin zu kleinen Scherraten und wieder zurück gemessen.

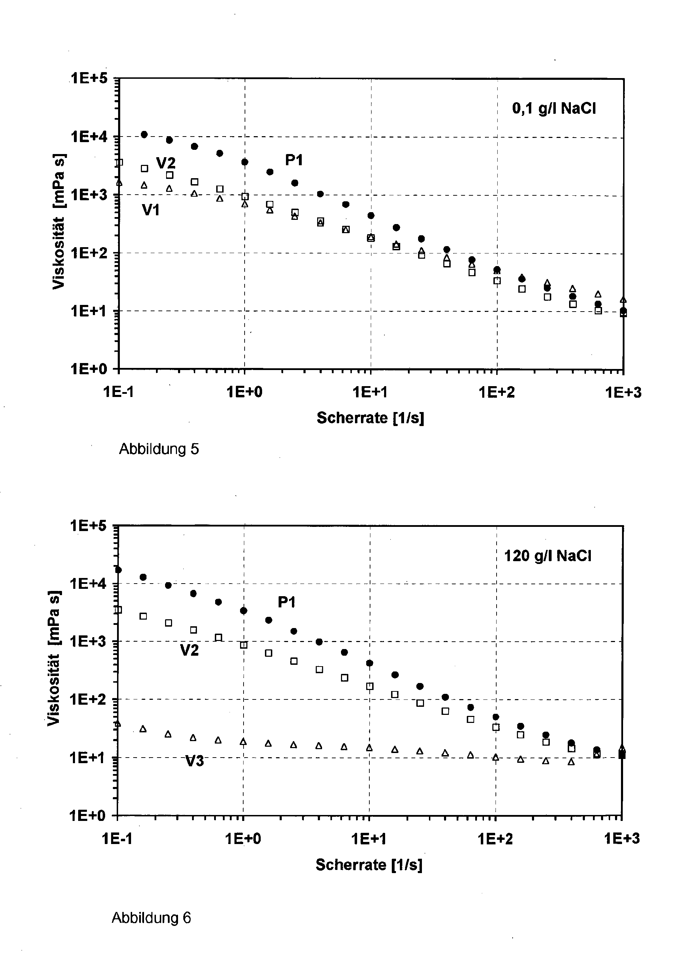

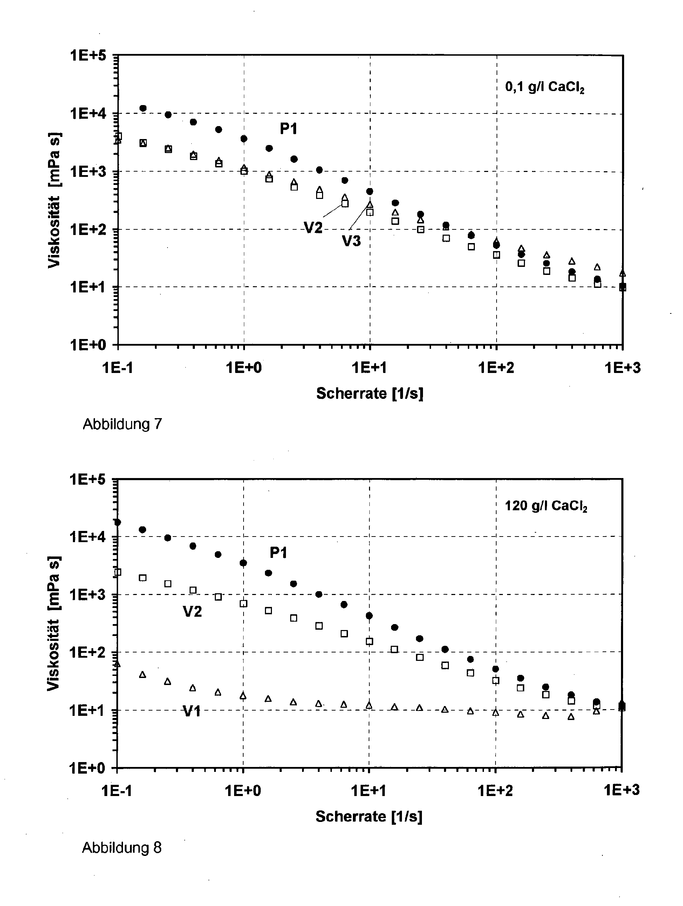

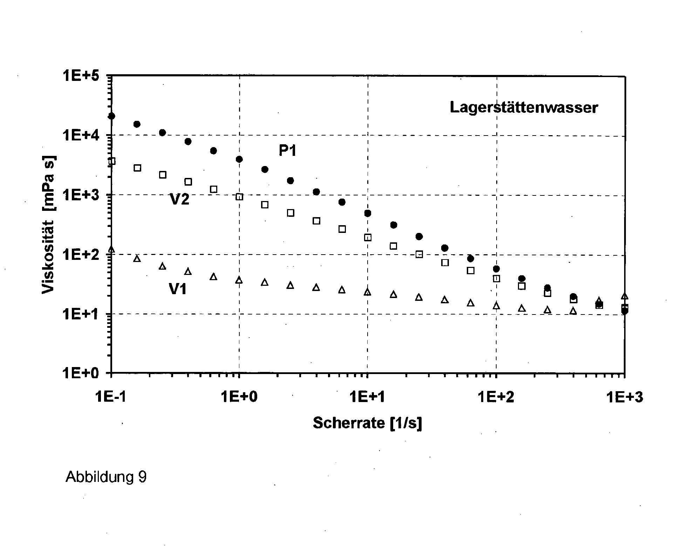

Die Ergebnisse sind in den Abbildungen 5 bis 9 zusammengestellt.

In niedersalinem Wasser zeigen alle Polymere eine Abnahme der Viskosität mit zunehmender Scherrate. Bei allen Versuchen ist Polymer P1 besser als die Vergleichspolymere V1 und V2, d.h. die Viskositätseffizienz von Polymer P1 ist am besten.
In hochsalinem Wasser sowie Lagerstättenwasser bleibt die Viskosität der beiden Biopolymere P1 und V2 in etwa gleich, während sich die Viskosität des synthetischen Polymers V1 (Copolymer aus Acrylamid und 2-Acrylamido-2-methylpropan-sulfonsäure) sehr stark verringert.

### Versuchsreihe 5:

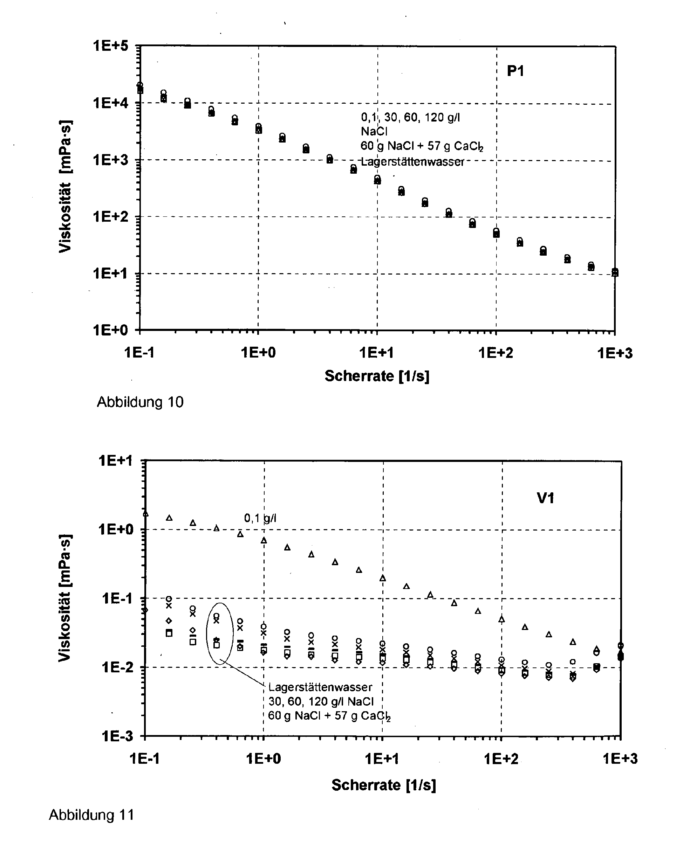

Weiterhin wurden die Viskosität der Polymere P1 und V1 Abhängigkeit der Scherrate bei unterschiedlichen Salzmengen gemessen, und zwar 0,1 g/l NaCl, 30 g/l NaCl, 60 g/l NaCl, 120 g/l NaCl, einem Gemisch aus 60 g/l NaCl und 57 g/l CaCl₂ sowie Lagerstättenwasser der obigen Zusammensetzung. Die Messreihen sind in den Abbildungen 10 und 11 dargestellt. Die Viskosität des Polymers P1 ist vom Salzgehalt unabhängig, während sich die Viskosität von Polymer V1 bereits bei einem Salzgehalt von 30 g/l NaCl (entspricht etwa Meerwasser) sehr stark verringert.

### Verzeichnis der Abbildungen:

- Abbildung 1: Schematische Darstellung der zur Herstellung des Glucans P1 verwendeten Apparatur
- Abbildung 2: Abhängigkeit der Viskosität der Polymere P1, V1 und V2 von der Konzentration
- Abbildung 3: Temperaturabhängigkeit der Viskosität der Polymere P1, V1, V2 und V3 in Reinstwasser
- Abbildung 4: Temperaturabhängigkeit der Viskosität der Polymere P1, V1, V2 und V3 in Lagerstätteriwasser
- Abbildung 5: Viskosität der Polymere P1, V1 und V2 in niedersalinem Wasser (0,1 g/l NaCl) in Anhängigkeit der Scherrate
- Abbildung 6: Viskosität der Polymere P1, V1 und V2 in hochsalinem Wasser (120 g/l NaCl) in Anhängigkeit der Scherrate
- Abbildung 7: Viskosität der Polymere P1, V1 und V2 in niedersalinem Wasser (0,1 g/l CaCl₂) in Anhängigkeit der Scherrate
- Abbildung 8: Viskosität der Polymere P1, V1 und V2 in hochsalinem Wasser (120 g/l CaCl₂) in Anhängigkeit der Scherrate
- Abbildung 9: Viskosität der Polymere P1, V1 und V2 in hochsalinem Wasser (Lagerstättenwasser) in Anhängigkeit der Scherrate
- Abbildung 10: Viskosität des Polymers P1 bei unterschiedlichen Salzkonzentrationen
- Abbildung 11: Viskosität des Polymers V1 bei unterschiedlichen Salzkonzentrationen

## Patentansprüche

1. Verfahren zur Erdölförderung aus Lagerstätten mit einer Lagerstättentemperatur T_{L} von mindestens 70°C, wobei die Lagerstätte neben Öl Lagerstättenwasser mit einer Salinität von 20 000 ppm bis 350 000 ppm umfasst, und das Öl eine Viskosität η_{Öl} (gemessen bei T_{L}) von mindestens 3 mPa*s aufweist, indem man eine wässrige Formulierung (F) umfassend mindestens ein Glucan mit einer β-1,3-glykosidisch verknüpften Hauptkette sowie β-1,6-glykosidisch daran gebundenen Seitengruppen mit einem gewichtsmittleren Molekulargewicht M_{w} von 1,5*10⁶ bis 25*10⁶ g/mol durch mindestens eine Injektionsbohrung in eine Erdöllagerstätte einpresst und der Lagerstätte durch mindestens eine Produktionsbohrung Rohöl entnimmt, **dadurch gekennzeichnet, dass** das Verfahren mindestens die folgenden Verfahrensschritte umfasst:
(1) Bereitstellen eines Konzentrats (K) des Glucans in Wasser mit einer Konzentration von mehr als 3 g/l bis 30 g/l,
(2) Herstellen der wässrigen Formulierung (F) durch Verdünnen des gemäß Schritt (1) bereitgestellten Konzentrats (K) vor Ort mit Wasser auf eine Glucankonzentration von 0,05 g/l bis 3 g/l, mit der Maßgabe, dass man die Konzentration so wählt, dass die Viskosität η_{F} (gemessen bei 7 s⁻¹ und T_{L}) der wässrigen Formulierung (F) mindestens 3 mPa*s beträgt, wobei die Viskosität η_{F} im Vergleich zu der Viskosität η_{Öl} (gemessen bei T_{L}) so gewählt wird, dass η_{F} ≤ η_{Öl} ist, sowie
(3) Injizieren der wässrigen Formulierung (F) in die Erdölformation und Entnahme von Rohöl durch mindestens eine Produktionsbohrung.

2. Verfahren gemäß Anspruch 1, **dadurch gekennzeichnet, dass** die Lagerstättentemperatur 70°C bis 150°C beträgt.

3. Verfahren gemäß Anspruch 1, **dadurch gekennzeichnet, dass** die Lagerstättentemperatur 100°C bis 135°C beträgt.

4. Verfahren gemäß einem der Ansprüche 1 bis 3, **dadurch gekennzeichnet, dass** die Konzentration des Glucans im Konzentrat (K) 5 g/l bis 25 g/l beträgt.

5. Verfahren gemäß einem der Ansprüche 1 bis 4, **dadurch gekennzeichnet, dass** die Konzentration des Glucans in der wässrigen Formulierung (F) 0,08 g/l bis 0,5 g/l beträgt.

6. Verfahren gemäß einem der Ansprüche 1 bis 5, **dadurch gekennzeichnet, dass** die wässrige Formulierung (F) weiterhin Salze in einer Menge von 20 000 ppm bis 350 000 ppm umfasst.

7. Verfahren gemäß Anspruch 6, **dadurch gekennzeichnet, dass** der Anteil von Erdalkalimetallionen in der Formulierung (F) 1000 bis 53 000 ppm beträgt.

8. Verfahren gemäß Anspruch 1 bis 6, **dadurch gekennzeichnet, dass** man das Verdünnen in Schritt (2) mit Meerwasser vornimmt.

9. Verfahren gemäß Anspruch 1 bis 6, **dadurch gekennzeichnet, dass** man dass man das Verdünnen in Schritt (2) mit gefördertem Lagerstättenwasser vornimmt.

10. Verfahren gemäß einem der Ansprüche 1 bis 9, **dadurch gekennzeichnet, dass** die Viskosität des Öls η_{Öl} (gemessen T_{L}) 100 mPa*s bis 10000 mPa*s beträgt.

11. Verfahren gemäß Anspruch 1, **dadurch gekennzeichnet, dass** die Viskosität η_{F} im Bereich von 0,1 η_{Öl} bis 0,99 η_{Öl} liegt.

12. Verfahren gemäß einem der Ansprüche 1 bis 11, **dadurch gekennzeichnet, dass** die durchschnittliche Permeabilität der Formation 10 Millidarcy bis 4 Darcy beträgt.

13. Verfahren gemäß einem der Ansprüche 1 bis 11, **dadurch gekennzeichnet, dass** die durchschnittliche Permeabilität der Formation 100 Millidarcy bis 2 Darcy beträgt.

14. Verfahren einem der Ansprüche 1 bis 13, **dadurch gekennzeichnet, dass** man Polymerlösung mit einer Scherrate von mindestens 30000 s⁻¹ in die Formation injiziert.

15. Verfahren einem der Ansprüche 1 bis 14, **dadurch gekennzeichnet, dass** die Formulierung (F) weiterhin mindestens ein Biozid umfasst.

16. Verfahren einem der Ansprüche 1 bis 15, **dadurch gekennzeichnet, dass** die Formulierung (F) weiterhin mindestens einen Sauerstofffänger umfasst.

17. Verfahren gemäß einem der Ansprüche 1 bis 16, **dadurch gekennzeichnet, dass** das Verfahren weiterhin das Injizieren von Tensiden umfasst, wobei die Tenside eine Komponente der Formulierung (F) sein können oder eine wässrige Tensidformulierung zusätzlich injiziert wird.

18. Verfahren gemäß einem der Ansprüche 1 bis 17, **dadurch gekennzeichnet, dass** das Verfahren weiterhin das Injizieren von weiteren, von den Glucanen verschiedenen Polymeren umfasst, wobei die weiteren Polymere eine Komponente der Formulierung (F) sein können oder eine wässrige Polymerformulierung zusätzlich injiziert wird.

19. Verfahren gemäß einem der Ansprüche 1 bis 18, **dadurch gekennzeichnet, dass** man Verfahrensschritt (2) unter sauerstofffreien Bedingungen durchführt.

20. Verfahren gemäß einem der Ansprüche 1 bis 19, **dadurch gekennzeichnet, dass** man das Verfahren im Anschluss an Wasserfluten der Lagerstätte durchführt.

21. Verfahren gemäß einem der Ansprüche 1 bis 19, **dadurch gekennzeichnet, dass** man das Verfahren im Anschluss an Tensidfluten der Lagerstätte durchführt.

## Claims

1. A process for mineral oil production from deposits with a deposit temperature T_{L} of at least 70°C, said deposit comprising, as well as oil, deposit water with a salinity of 20 000 ppm to 350 000 ppm, and said oil having a viscosity ηₒᵢₗ (measured at T_{L}) of at least 3 mPa*s' by injecting an aqueous formulation (F) comprising at least one glucan with a β-1,3-glycosidically bonded main chain, and side groups β-1,6-glycosidically bonded thereto and having a weight-average molecular weight M_{w} of 1.5*10⁶ to 25*10⁶ g/mol into a mineral oil deposit through at least one injection borehole, and withdrawing crude oil from the deposit through at least one production borehole, wherein the process comprises at least the following process steps:
(1) providing a concentrate (K) of the glucan in water with a concentration of more than 3g/l to 30 g/l,
(2) preparing the aqueous formulation (F) by diluting the concentrate (K) provided in step (1) on site with water to a glucan concentration of 0.05 g/l to 3 g/l, with the proviso that the concentration is selected such that the viscosity η_{F} (measured at 7 s⁻¹ and T_{L}) of the aqueous formulation (F) is at least 3 mPa*s, the viscosity η_{F} being selected in comparison to the viscosity ηₒᵢₗ (measured at T_{L}) such that η_{F} ≤ ηₒᵢₗ, and
(3) injecting the aqueous formulation (F) into the mineral oil formation and withdrawing crude oil through at least one production borehole.

2. The process according to claim 1, wherein the deposit temperature is 70°C to 150°C.

3. The process according to claim 1, wherein the deposit temperature is 100°C to 135°C.

4. The process according to any of claims 1 to 3, wherein the concentration of the glucan in the concentrate (K) is 5 g/l to 25 g/l.

5. The process according to any of claims 1 to 4, wherein the concentration of the glucan in the aqueous formulation (F) is 0.08 g/l to 0.5 g/l.

6. The process according to any of claims 1 to 5, wherein the aqueous formulation (F) further comprises salts in an amount of 20 000 ppm to 350 000 ppm.

7. The process according to claim 6, wherein the proportion of alkali earth metal ions in the formulation (F) is 1000 to 53 000 ppm.

8. The process according to any of claims 1 to 6, wherein the dilution in step (2) is undertaken with seawater.

9. The process according to any of claims 1 to 6, wherein the dilution in step (2) is undertaken with produced deposit water

10. The process according to any of claims 1 to 9, wherein the viscosity of the oil ηₒᵢₗ (measured at T_{L}) is 100 mPa*s to 10000 mPa*s.

11. The process according to claim 1, wherein the viscosity η_{F} is in the range from 0.1 ηₒᵢₗ to 0.99 ηₒᵢₗ.

12. The process according to any of claims 1 to 11, wherein the average permeability of the formation is 10 millidarcies to 4 darcies.

13. The process according to any of claims 1 to 11, wherein the average permeability of the formation is 100 millidarcies to 2 darcies.

14. The process according to any of claims 1 to 13, wherein polymer solution is injected into the formation with a shear rate of at least 30 000 s⁻¹.

15. The process according to any of claims 1 to 14, wherein the formulation (F) further comprises at least one biocide.

16. The process according to any of claims 1 to 15, wherein the formulation (F) further comprises at least one oxygen scavenger.

17. The process according to any of claims 1 to 16, wherein the process further comprises the injection of surfactants, in which case said surfactants may be a component of the formulation (F) or an aqueous surfactant formulation is additionally injected.

18. The process according to any of claims 1 to 17, wherein the process further comprises the injection of further polymers other than the glucans, in which case the further polymers may be a component of formulation (F) or an aqueous polymer formulation is additionally injected.

19. The process according to any of claims 1 to 18, wherein process step (2) is performed under oxygen-free conditions.

20. The process according to any of claims 1 to 19, wherein the process is performed after water flooding of the deposit.

21. The process according to any of claims 1 to 19, wherein the process is performed after surfactant flooding of the deposit.

## Revendications

1. Procédé d'extraction de pétrole de gisements présentant une température de gisement T_{L} d'au moins 70°C, le gisement comprenant, outre du pétrole, de l'eau de gisement présentant une salinité de 20 000 ppm à 350 000 ppm et le pétrole présentant une viscosité η_{pétrole} (mesurée à T_{L}) d'au moins 3 mPa.s, en ce qu'on comprime une formulation aqueuse (F) comprenant au moins un glucane présentant une chaîne principale liée de manière ß-1,3-glycosidique ainsi que des groupes latéraux qui y sont liés de manière ß-1,6-glycosidique, présentant un poids moléculaire pondéral moyen M_{w} de 1,5 * 10⁶ à 25 * 10⁶ g/mole via au moins un trou d'injection dans un gisement de pétrole et on prélève du pétrole brut du gisement via au moins un trou de production, **caractérisé en ce que** le procédé comprend au moins les étapes de procédé suivantes :
(1) mise à disposition d'un concentrat (K) du glucane dans l'eau présentant une concentration supérieure à 3 g/l jusqu'à 30 g/l,
(2) préparation de la formulation aqueuse (F) par dilution du concentrat (K) mis à disposition selon l'étape (1) sur site avec de l'eau à une concentration en glucane de 0,05 g/l à 3 g/l, à condition qu'on choisisse la concentration de manière telle que la viscosité η_{F} (mesurée à 7 s⁻¹ et à T_{L}) de la formulation aqueuse (F) est d'au moins 3 mPa.s, la viscosité η_{F} étant choisie par rapport à la viscosité η_{pétrole} (mesurée à T_{L}) de manière telle que η_{F} ≤ η_{pétrole} et
(3) injection de la formulation aqueuse (F) dans la formation de pétrole et prélèvement de pétrole brut via au moins un trou de production.

2. Procédé selon la revendication 1, **caractérisé en ce que** la température du gisement est de 70°C à 150°C.

3. Procédé selon la revendication 1, **caractérisé en ce que** la température du gisement est de 100°C à 135°C.

4. Procédé selon l'une quelconque des revendications 1 à 3, **caractérisé en ce que** la concentration du glucane dans le concentrat (K) est de 5 g/l à 25 g/l.

5. Procédé selon l'une quelconque des revendications 1 à 4, **caractérisé en ce que** la concentration du glucane dans la formulation aqueuse (F) est de 0,08 g/l à 0,5 g/l.

6. Procédé selon l'une quelconque des revendications 1 à 5, **caractérisé en ce que** la formulation aqueuse (F) comprend en outre des sels en une quantité de 20 000 ppm à 350 000 ppm.

7. Procédé selon la revendication 6, **caractérisé en ce que** la proportion d'ions de métal alcalinoterreux dans la formulation (F) est de 1000 à 53 000 ppm.

8. Procédé selon la revendication 1 à 6, **caractérisé en ce qu'**on réalise la dilution dans l'étape (2) avec de l'eau de mer.

9. Procédé selon la revendication 1 à 6, **caractérisé en ce qu'**on réalise la dilution dans l'étape (2) avec de l'eau de gisement extraite.

10. Procédé selon l'une quelconque des revendications 1 à 9, **caractérisé en ce que** la viscosité du pétrole η_{pétrole} (mesurée à T_{L}) vaut 100 mPa.s à 10 000 mPa.s.

11. Procédé selon la revendication 1, **caractérisé en ce que** la viscosité η_{F} se situe dans la plage de 0,1 η_{pétrole} à 0,99 η_{pétrole}.

12. Procédé selon l'une quelconque des revendications 1 à 11, **caractérisé en ce que** la perméabilité moyenne de la formation est de 10 millidarcy à 4 darcy.

13. Procédé selon l'une quelconque des revendications 1 à 11, **caractérisé en ce que** la perméabilité moyenne de la formation est de 100 millidarcy à 2 darcy.

14. Procédé selon l'une quelconque des revendications 1 à 13, **caractérisé en ce qu'**on injecte la solution polymère à une vitesse de cisaillement d'au moins 30 000 s⁻¹ dans la formation.

15. Procédé selon l'une quelconque des revendications 1 à 14, **caractérisé en ce que** la formulation (F) contient en outre au moins un biocide.

16. Procédé selon l'une quelconque des revendications 1 à 15, **caractérisé en ce que** la formulation (F) contient en outre au moins un piège à oxygène.

17. Procédé selon l'une quelconque des revendications 1 à 16, **caractérisé en ce que** le procédé comprend en outre l'injection d'agents tensioactifs, les agents tensioactifs pouvant être un composant de la formulation (F) ou une formulation aqueuse d'agents tensioactifs étant injectée en plus.

18. Procédé selon l'une quelconque des revendications 1 à 17, **caractérisé en ce que** le procédé comprend en outre l'injection d'autres polymères, différents des glucanes, les autres polymères pouvant être un composant de la formulation (F) ou une formulation aqueuse de polymères étant injectée en plus.

19. Procédé selon l'une quelconque des revendications 1 à 18, **caractérisé en ce qu'**on réalise l'étape de procédé (2) dans des conditions exemptes d'oxygène.

20. Procédé selon l'une quelconque des revendications 1 à 19, **caractérisé en ce qu'**on réalise le procédé consécutivement à l'injection d'eau dans le gisement.

21. Procédé selon l'une quelconque des revendications 1 à 19, **caractérisé en ce qu'**on réalise le procédé consécutivement à l'injection d'agents tensioactifs dans le gisement.
